# EUROPEAN PATENT APPLICATION

(11) **EP 1 092 697 A2**
(43) Date of publication of application: **18.04.2001**
(21) Application number: 00121258.8
(22) Date of filing: 04.10.2000
(51) Int. Cl.: C04B 41/85, B44C 1/165

(54) **Method for producing decorations of ceramic articles, and decoration obtained thereby**

(30) Priority: 13.10.1999 IT MO990222
(71) Applicant: DECAR S.p.A., 41040 Spezzano Di Fiorano (Prov. of Modena) (IT)
(72) Inventor: Marcheselli, Ermanno, 41049 Sassuolo (Prov. of Modena) (IT)
(74) Representative: Modiano, Guido, Dr.-Ing.

(57) **Abstract**

A method for producing decorations for ceramic articles consists in depositing one or more layers (2, 3, 4) of decorative ceramic material on a backing sheet (1) which can be eliminated during firing and in individually drying the layers of ceramic material so as to constitute a decorative insert (5) of preset thickness which can be applied to the exposed surface of a ceramic article and has one face which adheres to the backing sheet (1).

## Description

The present invention relates to a method for producing decorations for ceramic items and to the decoration obtained thereby.

Several methods are known for decorating the exposed face of ceramic articles, particularly tiles, including the so-called transfer method.

This method consists in preparing decorative inserts made of ceramic material of a type compatible with the article, in applying and/or inserting these inserts at the exposed surface of the article, and in subjecting said article to drying and firing in order to obtain the finished product.

There are different methods for producing such decorative inserts which are already disclosed in prior patents and which provide for a screen-printing operation performed on a backing sheet until a given thickness of decorative ceramic material according to a predefined pattern is reached.

Screen-printing decoration consists of one or more successive depositions of ceramic material mixed with a water- or solvent-based carrier, or of ceramic material in powder or grit form, on a layer of adhesive applied beforehand on the backing.

The lower face of the inserts thus produced is in contact with the corresponding backing sheet, from which the inserts are then removed to be applied and/or inserted at the exposed face of the ceramic article to be decorated.

The operation for separating the inserts from the backing sheet is performed according to different methods and with different devices, depending on the material that constitutes the backing sheet.

If the backing is made of paper, separation occurs by resorting to a wet method by keeping the transfer immersed in a water bath for a time sufficient to remove the backing from the insert.

If the backing is made of waxed paper, since the layer of wax is interposed between the paper and the decoration, separation occurs by keeping the paper in contact with a hot plate, so that the wax, by melting, allows to pick up the insert with appropriate grip means made of silicone or the like.

Finally, if the backing is made of polythene-coated paper, separation is performed with a dry process: in this case, the upper face of the insert is advantageously covered by a layer of adhesive or by a sheet of tissue paper which facilitates its separation and subsequent application to the article.

This application can occur by using hot presses or the like or by simple resting contact or by using special adhesives which are uniformly distributed on the surface of the article that is adapted to receive the decorative insert.

These methods for preparing decorative inserts, however, are not devoid of drawbacks, including the fact that the operation for separation from the corresponding backing sheet requires the installation of specific equipment and/or the use of specialized labor, consequently increasing the complexity of the manufacturing system, slowing down production and increasing operating costs as well as energy and labor costs.

It is also noted that the backing sheet is waste material which cannot be recovered, and this, together with the water or heat energy used for separation, further increases production costs.

The aim of the present invention is to eliminate the above-noted drawbacks of the conventional methods, by providing a method for producing decorations for ceramic articles and a decoration produced thereby which allow to prepare decorative inserts without having to remove them from their backing sheets and allows to simplify the apparatus for the production and/or decoration of the articles, reduce manufacturing times, increase productivity, eliminate waste of material and water and reduce production costs.

An object of the present invention is to improve and facilitate the step for the application of the decorative inserts to ceramic articles both during their formation and during successive manufacturing steps.

Within the scope of this aim, another object of the present invention is to achieve the above aim and objects with a structure which is simple, relatively easy to provide in practice, safe in use, effective in operation, and relatively low in cost.

These and other objects are achieved by the present method for producing decorations for ceramic articles, characterized in that it comprises the steps of: depositing one or more layers of decorative ceramic material on a backing sheet which can be eliminated during firing and individually drying said layers of ceramic material so as to constitute a decorative insert of preset thickness which can be applied to the exposed surface of a ceramic article and has one face which adheres to said backing sheet.

The decoration thus obtained is constituted by a backing sheet which can be eliminated during firing and on which one or more layers of decorative ceramic material are distributed being adapted to form a decorative insert which can be applied to the exposed surface of a ceramic article.

Further characteristics and advantages of the present invention will become better apparent from the following detailed description of a preferred but not exclusive embodiment of a method for producing decorations for ceramic articles and of the decoration produced thereby, illustrated only by way of non-limitative example in the accompanying drawings, wherein:
Figures 1 to 6 are schematic views of the successive steps of the method according to the invention;
Figure 7 is a schematic perspective view of a decoration according to the invention, obtained with the method of Figures 1 to 6;
Figures 8 and 9 are schematic views of the steps for applying on a ceramic article the decoration obtained with the method according to the invention.

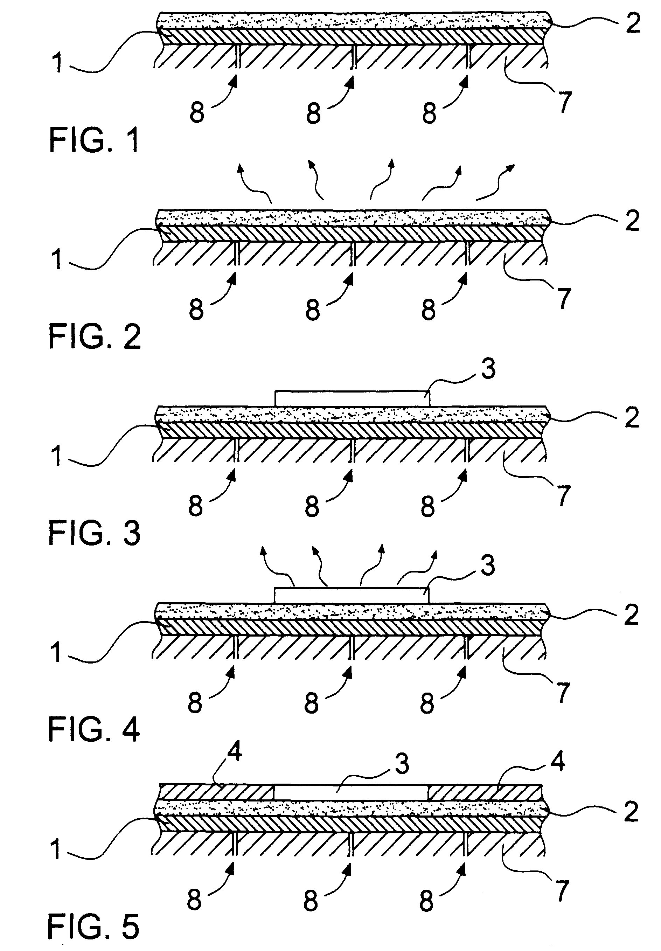

With reference to the figures, the reference numeral 1 designates a backing sheet, on the upper surface of which a first layer of ceramic material 2 is deposited; said layer can, for example, cover a specific percentage of the surface of the sheet 1 (Figure 1).

The sheet 1, on which the first layer of material 2 is deposited, is then subjected to a first drying process, during which the material 2 is consolidated on the sheet 1, which thus begins to acquire greater consistency and body (Figure 2).

Then a second layer of ceramic material 3 is deposited on the sheet 1 (Figure 3), and said material is then subjected to a respective drying process (Figure 4), during which the material 3 consolidates on the first layer 2 and accordingly on the sheet 1.

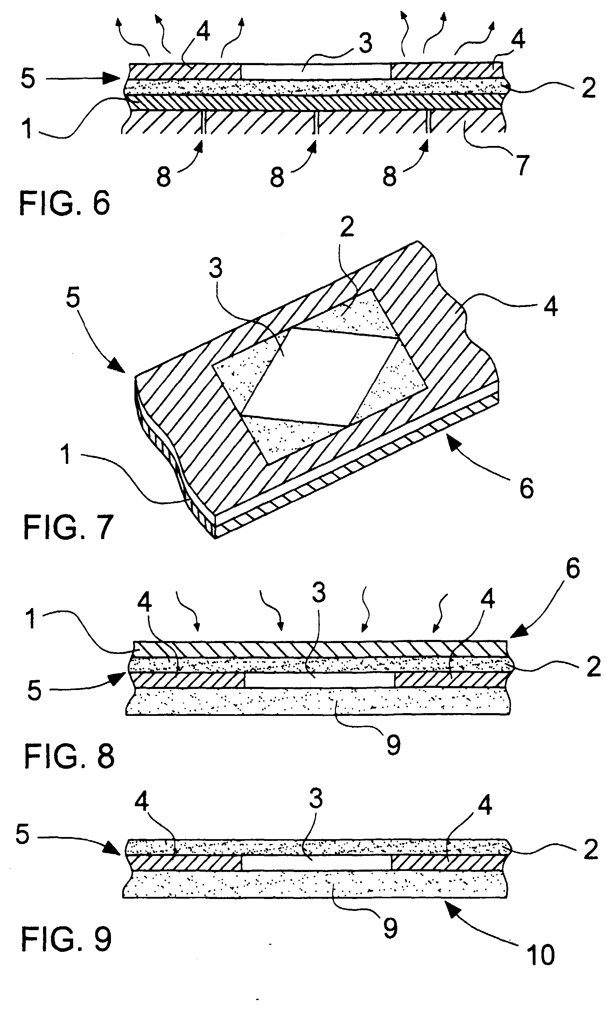

The backing sheet 1 acquires greater consistency and can be subjected to the deposition of a third layer of ceramic material 4 (Figure 5) and to the corresponding drying process (Figure 6), with further consolidation and thickening of the resulting decoration.

It should be noted that the various ceramic materials deposited on the sheet 1 can cover, according to particular decorative patterns, predefined percentages of its upper surface and can constitute both overlapping layers (materials 2 and 3) and interlocking patterns (materials 3 and 4).

The alternating succession of said deposition steps and of the respective drying steps, the latter being illustrated by convention by means of upward arrows, allows to obtain a decorative insert 5 which has a preset thickness and pattern and has a lower face which adheres to the backing sheet 1 and constitutes with it the decoration 6 (Figure 7).

Careful adjustment of the parameters that influence the deposition steps (amount of material and of any carrier, percentage of surface covered, additives) and the drying steps (nature of the material, drying times and means) allows the backing sheet 1 which is gradually decorated to gradually acquire consistency and strength without losing its flexibility; the decoration 6 can thus be subsequently extracted, picked up and handled according to production requirements.

The backing sheet 1 and the insert 5 constituted by the layers of material 2, 3 and 4 are integral parts of the decoration 6 produced with the method according to the invention and do not require separation before application to the exposed surface of any ceramic article.

Advantageously, the sheet 1 is made of a material which can be eliminated during the subsequent firing of the decorated ceramic articles and is constituted by tissue paper or, as possible alternatives, by a layer of adhesive or of polystyrene or by a mixture of adhesive and ceramic material.

In order to easily perform the decoration method according to the invention and particularly in order to extract and pick up the resulting decoration 6, the backing sheet 1 is arranged on a non-stick supporting surface 7.

The supporting surface 7 can be covered with polythene-coated paper, must have a structure which allows effective execution of the drying steps, and can be provided with a plurality of holes 8 which, with the aid of respective suction means, not shown, allow to keep the backing sheet 1 in contact with said supporting surface 7.

The depositions of the layers of decorative ceramic material occur, for example, by screen printing or by using disks or bells or rollers or hoppers and the like.

The depositions of the layers of ceramic material consist in depositing mixtures of ceramic material in powder or grit form with a water- or solvent-based carrier, or mixtures of colored clays with a water- or solvent-based carrier.

As an alternative, such depositions can consist in depositing a layer of adhesive on which a powder or grit of ceramic material is then deposited, or in spreading and drying a thin layer of adhesive on which a series of layers of powder or grit of ceramic material mixed with adhesive, alternated with layers of powder or grit of ceramic material without adhesive, are then deposited.

It is thus possible to deposit pastes, enamels, mixtures of clays, powders, grits, more or less transparent glazes; all these ceramic materials can receive the addition of additives and/or dyes in order to obtain particular decorative effects.

The method according to the invention further comprises a step for the application of the decoration 6 at the exposed surface of a ceramic article 9 (Figure 8).

The application of the decoration requires no separation of the decorative insert 5 from the backing sheet 1, since as noted such sheet can be eliminated during firing.

The decoration 6 is preferably applied so that the sheet 1 lies externally with respect to the body of the ceramic article 9 and the decorative insert 5 is instead kept in direct contact with the body of said article.

As an alternative, the decoration 6 is applied so that the decorative insert 5 is directed towards the outside of the body of the ceramic article 9 and the sheet 1 is instead in contact with the body of the article 9.

Conveniently, the sheet 1 is made of a material which does not isolate, during firing, the body of the article 9 from the decorative insert 5 applied thereon.

Application can occur both during formation of the ceramic article to be decorated, which can occur by pressing, casting, extrusion or other methods, and on already-formed ceramic articles.

For example, during the pressing of a tile the application can consist in loading the ceramic material that constitutes the body of the tile in the mold, in arranging the decoration thereon, and in performing dry pressing and viceversa.

If application occurs during formation, for example by casting, the decoration is deposited on the bottom of the mold so that the backing sheet 1 is arranged in contact with the internal surface of the mold; then the ceramic mix that constitutes the body of the article is poured into the mold, dried and extracted.

In both of these cases, the use of tissue paper as a backing sheet is advantageous, because it prevents the decorative insert from clinging to the pads and/or hot molds of the presses and because it does not limit the step for the drying of the ceramic mix poured into the mold.

As mentioned, the decoration 6 can also be applied on ceramic articles which have already been formed with any production method and in any state of manufacture (raw, dried, partially fired, fired, partially decorated).

In this case, a layer of solvent is distributed onto the exposed surface of the article to be decorated, and the decoration 6 is deposited on the layer with the backing sheet 1 facing outwardly and the decorative insert 5 in contact with the solvent.

A slight pressure is then applied to the decoration 6 so that the insert 5 covers all of the surface to be decorated and, as a consequence of the reaction between the solvent and the decorative material, adheres to the article.

In any case, the ceramic material that constitutes the decorative insert 5 must be compatible with the exposed surface of the ceramic article on which it is applied and/or partially inserted.

Advantageously, the article 9 on which the decoration 6 has been applied can be constituted by a mixture of ceramic material of different kinds and may have any shape, dimensions and curvature.

The article 9, with the decoration 6 applied thereto, is then subjected to at least one drying step and to at least one firing step (Figure 8) for consolidating the decorative insert 5 and the ceramic article 9 into a final product 10 whose exposed surface is decorated.

During this last firing step (shown, by convention, by means of downward arrows), the backing sheet 1 dissolves and leaves the decorative insert 5 exposed on the surface of the article 9.

The resulting final product 10 can then be subjected to subsequent finishing operations, such as for example polishing or grinding.

Finally, it is noted that in the above figures the thicknesses of the sheet 1, as well as the thicknesses of the deposited layers of material 2, 3 and 4 are merely examples for the sake of illustration.

In practice it has been observed that that the above-described invention achieves the intended aim and objects, i.e. provides decorations (transfers) which can be applied to ceramic articles without having to first separate the decorative inserts from their backing sheets, reduces manufacturing and labor costs, simplifies the corresponding apparatus and limits the waste of material and energy consumption.

Moreover, with the method according to the invention it is possible to produce the decorations in continuous sheets whose consistency and flexibility are such as to allow their simple and safe handling in subsequent steps for collection, storage and cutting, and said decorations can thus be used in continuous processes.

The invention thus conceived is susceptible of numerous modifications and variations, all of which are within the scope of the inventive concept.

All the details may further be replaced with other technically equivalent ones.

In practice, the materials employed, as well as the shapes and the dimensions, may be any according to requirements without thereby abandoning the scope of the protection of the appended claims.

The disclosures in Italian Patent Application No. MO99A000222 from which this application claims priority are incorporated herein by reference.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A method for producing decorations for ceramic articles, characterized in that it comprises the steps of depositing one or more layers of decorative ceramic material (2) on a backing sheet (1) which can be eliminated during firing and individually drying said layers of ceramic material so as to constitute a decorative insert (5) of preset thickness which can be applied to the exposed surface of a ceramic article and has one face which adheres to said backing sheet (1).

2. The method according to claim 1, characterized in that it comprises a succession of separate steps for the deposition of said layers of ceramic material (2) alternated with respective drying steps.

3. The method according to claim 1, characterized in that said deposition of a layer of ceramic material consists in depositing a mixture of ceramic material in powder or grit form with a water- or solvent-based carrier.

4. The method according to claim 1, characterized in that said deposition of a layer of ceramic material (2) consists in depositing a layer of adhesive on which a powder or grit of ceramic material is then deposited, so as to obtain mixing of said adhesive and said powder.

5. The method according to one or more of the preceding claims, characterized in that said deposition of a layer of ceramic material (2) consists in spreading and drying, on said backing sheet (1), a thin layer of adhesive on which one or more layers of grit of ceramic material mixed with adhesive, alternated with one or more layers of grit of ceramic material without adhesive, are then deposited.

6. The method according to one or more of the preceding claims, characterized in that said deposition of the layer of ceramic material (2) consists in depositing a mixture of colored clays with a water- or solvent-based carrier.

7. The method according to one or more of the preceding claims, characterized in that said backing sheet (1) is constituted by tissue paper.

8. The method according to one or more of the preceding claims, characterized in that said backing sheet (1) is constituted by a layer of adhesive.

9. The method according to one or more of the preceding claims, characterized in that said backing sheet (1) is constituted by a layer of a material such as polystyrene.

10. The method according to one or more of the preceding claims, characterized in that said backing sheet (1) is arranged on a supporting surface made of non-stick material.

11. The method according to one or more of the preceding claims, characterized in that said supporting surface has a plurality of holes which, by using respective suction means, are adapted to keep said backing sheet (1) in contact with said supporting surface.

12. The method according to one or more of the preceding claims, characterized in that it comprises a step for applying the decoration (6) thus obtained on the exposed surface of a ceramic article.

13. The method according to claim 12, characterized in that it comprises at least one drying step and at least one firing step for the decorated ceramic article which are adapted to consolidate said decorative insert (5) and said article into a monolithic unit and to eliminate said backing sheet (1).

14. The method according to claim 12, characterized in that the decoration (6) thus obtained is applied to the article so that the backing sheet (1) faces outwards and so that the decorative insert (5) made of ceramic material is arranged in contact with the exposed surface of the article.

15. The method according to claim 12, characterized in that the resulting decoration (6) is applied to the article so that the decorative insert (5) made of ceramic material faces outwards and so that the backing sheet (1) is arranged in contact with the exposed surface of the article.

16. The method according to one or more of the preceding claims, characterized in that the decoration (6) is applied during formation of the ceramic article.

17. The method according to one or more of the preceding claims, characterized in that the decoration (6) is applied after formation of the ceramic article.

18. The method acc-ording to one or more of the preceding claims, characterized in that said application of the decoration (6) comprises the steps of: distributing a layer of solvent on the exposed surface of the article to be decorated, depositing the decoration (6) on said layer of solvent, and applying a pressure which is adapted to ensure adhesion between the decorative insert (5) and the article.

19. The method according to one or more of the preceding claims, characterized in that it occurs continuously and comprises a step of positioning said continuous backing sheet (1) on a conveyor belt or the like, and a succession of separate steps for depositing, on said advancing sheet, layers of ceramic material, alternated with respective steps for drying the individual deposited layers, so as to obtain said decorative insert (5) of preset thickness, said succession of deposition steps alternated with the respective drying steps being adapted to give increasing consistency to said decoration (6).

20. The method according to one or more of the preceding claims, characterized in that said deposition occurs by screen-printing.

21. The method according to one or more of the preceding claims, characterized in that said deposition occurs by using disks or the like.

22. The method according to one or more of the preceding claims, characterized in that said deposition occurs by using rollers or the like.
